(19) **Europäisches Patentamt**

**European Patent Office**

**Office européen des brevets**

(11) **EP 1 345 859 B1**

(12) **EUROPÄISCHE PATENTSCHRIFT**

(45) Veröffentlichungstag und Bekanntmachung des Hinweises auf die Patenterteilung:
**08.11.2006 Patentblatt 2006/45**

(21) Anmeldenummer: **01271331.9**

(22) Anmeldetag: **12.12.2001**

(51) Int Cl.:
***C02F 5/08*** *(2006.01)*

(86) Internationale Anmeldenummer:
**PCT/EP2001/014559**

(87) Internationale Veröffentlichungsnummer:
**WO 2002/049972 (27.06.2002 Gazette 2002/26)**

(54) **VERHINDERUNG DER ABSCHEIDUNG VON CALCIUMFLUORID**

PREVENTION OF THE DEPOSITION OF CALCIUM FLUORIDE

PROCEDE POUR EMPECHER LE DEPOT DE FLUORURE DE CALCIUM

(84) Benannte Vertragsstaaten:
**AT BE CH CY DE DK ES FI FR GB GR IE IT LI LU MC NL PT SE TR**

(30) Priorität: **21.12.2000 DE 10064412**

(43) Veröffentlichungstag der Anmeldung:
**24.09.2003 Patentblatt 2003/39**

(73) Patentinhaber: **Henkel Kommanditgesellschaft auf Aktien**
**40589 Düsseldorf (DE)**

(72) Erfinder:
- **HATER, Wolfgang**
  **41564 Kaarst (DE)**
- **WEYERMANNS, Jens**
  **41363 Jüchen (DE)**

(56) Entgegenhaltungen:
**US-A- 4 080 289          US-A- 4 436 628**
**US-A- 5 439 611**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Verhinderung der Abscheidung von Calciumfluorid aus Kühl- und Prozesswässern. Das Phänomen der Calciumfluorid-Abscheidung tritt beispielsweise in Systemen auf, die mit Calcium-haltigen Wässern betrieben werden und in denen es zu einem Eintrag von Fluorid kommt. Beispiele hierfür sind die Spritzwasserkühlung in Stranggussanlagen oder die Gaswäsche bzw. Nassentstaubung von Gasen. Durch die Abscheidung von Calicumfluorid kann es zu verschiedenen Anlagenproblemen kommen, z. B. zu Belägen an wärmeführenden Oberflächen oder zur Verblockung von Spritzdüsen. Zusätzlich kann durch den Flurorid-Eintrag ins Wasser eine Verringerung des pH-Wertes auftreten und damit eine Korrosion von Anlagenteilen.

Zur Inhibierung der Calciumfluorid-Abscheidung aus Geothermal-Wässern wird in US 5268108 die Dosierung eines Dispergators aus den Gruppen Polyacrylate, Polyphosphonsäure, Polyethylenimin und Phosphonaminen vorgeschlagen. G. W. Schweitzer (Heating/Piping/Air Conditioning, 1971 (5) S. 78 ff) beschreibt die Verwendung von Aminomethylenphosphonsäuren, US 5562830 eine Mischung aus Polyepoxysuccinsäure und Phosphonocarbonsäure, JP 09299989 die Verwendung von Phosphonsäuren z. B. Hydroxiethandiphosphonsäure und Diethylentriaminpenta(methylenphosphonsäure), EP 0133210 ein Copolymer aus Acrylsäure und Methacrylsäure, Acrylamid und Methacrylamid oder Alkoxyalkylacrylatester oder Alkoxyalkylmethacrylatester zur Inhibierung von Calciumfluorid-Belägen. Ein Nachteil dieser Verfahren liegt darin, dass sie entweder unzureichende Wirkung aufweisen oder dass hohe Dosiermengen erforderlich sind, was eine Umweltbelastung darstellt.

US 5311925 beschreibt die Zugabe einer Magnesiumhydroxid-Aufschlämmung zum Kühlwasser von Stranggussanlagen nach der Spritzzone zur Reduktion des Fluorid-Gehaltes im Umlaufwasser. Die eingetragenen Feststoffe müssen anschließend wieder aus dem Umlaufwasser entfernt werden, so dass zusätzlich eine hohe Menge Schlamm gebildet wird, der entsorgt werden muss. Eine unvollständige Abtrennung der Feststoffe kann zu Ablagerungen und Verblockung von Düsen führen.

US 4080289 befaßt sich mit einer Anlage zur Aufarbeitung von Abwasser, die eine Umkehrosmose-Membran enthält. Um bei Anwesenheit von Fluoridionen im Abwasser ein Verblocken der Membran durch Bildung von $CaF_2$ zu verhindern, wird eine Zugabe von Al-Ionen zum Abwasser empfohlen. Dabei wird laut Beschreibung der pH-Wert auf 7 eingestellt. Das Molverhältnis Al zu F$^-$ soll nicht größer sein als 0,1. JP77-119353 (Chemical Abstracts 97:78320) behandelt ebenfalls die Zugabe von Aluminium-Salzen und Kalkmilch zur gezielten Ausfällung von Calciumfluorid aus Abwasser mit anschließender Abtrennung des löslichen Fluorid-Komplexes, um Membranverblockungen zu verhindern. Dieses Verfahren ist sehr aufwendig und bedarf entsprechender Anlagentechnik.

Die US 4 436 628 beschreibt ein Verfahren zur Inhibierung der Abscheidung von Calciumfluorid in wässrigen Systemen, beispielsweise in Kühlwasser-Systemen, durch Zugabe von Polyphosphorsäure oder neutralen Salzen derselben.

Der Erfindung lag die Aufgabe zu Grunde, ein effektives Verfahren zur Verhinderung von Calciumfluorid-Abscheidungen in Kühl- oder Prozesswasser zur Verfügung zu stellen, ohne die Nachteile der beschriebenen bekannten Verfahren aufzuweisen. Vorzugsweise sollte die Menge des benötigten organischen Scale-Inhibitors deutlich reduziert werden. Auf den Einsatz dieser Substanzen sollte im günstigen Fall ganz verzichtet werden können. In einer bevorzugten Ausführungsform des Verfahren soll die Säurekorrosion reduziert werden.

Die Aufgabe wird gelöst durch ein Verfahren zur Verhinderung der Abscheidung von Calciumfluorid in einem Kühl- oder Prozesswasser, dadurch gekennzeichnet, dass man dem Prozesswasser mindestens ein wasserlösliches Salz in einer Konzentration zwischen 0,5 und 10 mol/m$^3$ zugibt, das Magnesiumkationen sowie Gegenionen ausgewählt aus Clorid-, Nitrat-, Acetat-, Hydrogencarbonat-, Carbonat- und Sulfationen enthält.

Man gibt das wasserlösliche Salz oder die wasserlöslichen Salze dem Kühl- oder Prozesswasser in einer Gesamtkonzentration zwischen 0,5 und 10 mol/m$^3$, insbesondere zwischen 1 und 7 mol/m$^3$ zu. Diese Mengen sind bei praxisrelevanten Fluorid-Konzentrationen von 0,5 bis 20 mol/m$^3$ ausreichend. Dabei kann als Faustregel gelten, daß das Molverhältnis wasserlösliches Salz zu Fluorid zwischen etwa 0,2 und 2 liegen sollte. Bei geringerer Konzentration läßt die Wirksamkeit zunehmend nach, höhere Konzentrationen sind möglich, bringen aber in der Praxis keinen nennenswerten Vorteil.

Mit "wasserlöslich" ist hierbei gemeint, daß diese Salze in dem angegebenen Konzentrationsbereich in dem Kühl- oder Prozesswasser löslich sind. Die Magnesiumkationen werden mit Chlorid, Nitrat, Acetat, Hydrogencarbonat, Carbonat oder Sulfat als Gegenionen eingebracht.

Überraschenderweise hat sich gezeigt, dass durch Zugabe von diesen ausgewählten wasser-löslichen Salzen die Abscheidung von Calciumfluorid reduziert oder sogar vollständig verhindert werden kann. Insbesondere gilt dies für die praxisrelevanten pH-Werte von Prozeßwässern, die im Bereich von etwa 2 bis etwa 8 liegen, wobei ein pH-Wert von 3 selten unterschritten wird.

Bei Kombination dieses Verfahrens mit der Verwendung eines Scale-Inhibitors zeigen sich überraschenderweise synergistische Effekte bei der Calciumfluorid-Stabilisierung. Demgemäß liegt eine bevorzugte Ausführungsform darin, daß man dem Kühl- oder Prozeßwasser zusätzlich mindestens einen Scale-Inhibitor, erforderlichenfalls auch eine Kombination mehrerer Scale-Inhibitoren zugibt. Dies ist insbesondere dann empfehlenswert, wenn die Fluoridkonzentration im Bereich oberhalb 5 mol/m$^3$ liegt. Die Gesamtkonzentration der Scale-Inhibitoren liegt vorzugsweise im Bereich von 1 bis 200 ppm, insbesondere im Bereich von 3 bis 100 ppm. Bei geringerer Konzentration läßt die Wirksamkeit zunehmend nach, höhere Konzentrationen sind möglich, bringen aber in der Praxis keinen nennenswerten Vorteil. Allerdings kann je nach Calcium- und Fluorid-Gehalt des Kühl- oder Prozeßwassers gegebenenfalls auch ganz auf einen Scale-Inhibitor verzichtet werden.

Mit dem angelsächsischen, jedoch auch im deutschen Sprachraum auf dem betroffenen Fachgebiet üblichen Begriff "Scale-Inhibitor" werden Substanzen bezeichnet, die in unterstöchiometrischer Konzentration die Ausfällung schwerlöslicher Niederschläge auch dann verhindern können, wenn deren Löslichkeitsprodukt bereits überschritten ist. Derartige Substanzen werden auch als "Threshold-Substanzen" bezeichnet. Beispiele hierfür, die im Rahmen der vorliegenden Erfindung eingesetzt werden können, lassen sich in folgende Gruppen einteilen:

a) polymere Scale-Inhibitoren wie beispielsweise Polymere oder Copolymere von Acrylsäure, Methacrylsäure und/oder Maleinsäure, die zusätzlich Phosphon- oder Phosphinsäuregruppen tragen (wie beispielsweise Polyphosphinoacrylsäure) oder teilverestert sein können, teilverseifte Poly(meth)acrylamide, Polyaminosäuren wie beispielsweise Polyasparaginsäure, polymere Zucker (wie beispielsweise Inuline) und Zuckerderivate wie beispielsweise oxidierte Stärke, sowie anorganische Oligo- und Polyphosphate,

b) nicht polymere, zur Bildung von Chelatkomplexen befähigte Moleküle bzw. Ionen wie beispielsweise Aminoalkylen-, insbesondere Aminomethylenphosphonsäuren, Phosphonocarbonsäuren, geminale Diphosphonsäuren und Phosphorsäureester. Ausgewählte Beispiele sind Hydroxiethandiphosphonsäure, Phosphonobutantricarbonsäure, Aminotris(methylenphosphonsäure), Diethylentriaminpenta(methylenphosphonsäure), (2-Hydroxiethyl)aminobis(methylenphosphonsäure), Ethylendiamintetrakis(methylenphosphonsäure), Hexamethylendiamintetrakis(methylenphosphonsäure), (2-Ethylhexyl)-aminobis(methylenphosphonsäure), n-Octylaminobis(methylenphosphonsäure), Cyclohexan-1,2-diamintetrakis(methylenphosphonsäure), Pentaethylenhexarninoktakis-(methylenphosphonsäure), N,N-Bis(3-aminopropyl)aminohexakis(methylenphosphon-säure).

In der Regel werden diese Scale-Inhibitoren nicht als freie Säuren, sondern als lösliche Salze eingesetzt, beispielsweise als Na-Salze. In jedem Fall stellt sich im behandelten Wasser je nach dessen pH-Wert ein Gleichgewicht zwischen Säure- und Salzform ein. In einer besonderen Ausführungsform des Verfahrens wird zusätzlich zu der Mischung ein Puffer-System ins das Kühl- oder Brauchwasser gegeben, wodurch der mit dem Fluorid-Eintrag verbundene pH-Abfall im Wasser und damit der Säureangriff reduziert wird. Beispiele solcher Puffersubstanzen sind Alkalicarbonat, Alkalihydrogencarbonat, Alkaliborat, Alkali-orthophosphat, Alkalipolyphosphat. Aus Kostengründen sind als Alkalimetallionen die Natriumionen bevorzugt. Salze mit Kalium- und/oder Ammoniumionen sind jedoch ebenfalls einsetzbar.

Das erfindungsgemäße Verfahren ist insbesondere für Wasser entwickelt, das für einen oder mehrere der nachstehenden Zwecke eingesetzt wird: Spritzwasserkühlung in Stranggussanlagen, Gaskühlung, Gaswäsche, Nassentstaubung von Gasen.

Beispiele:

Arbeitsvorschrift:

200 ml auf 60 °C vorgewärmtes vollentsalztes Wasser (= VE-Wasser) werden in eine 250 ml PE-Flasche (PE = Polyethylen) gegeben. Dazu werden 3 ml einer Lösung von 29 g CaCl$_2$•2H$_2$O in 1 l VE-wasser, 3 ml einer Lösung des zu testenden wasserlöslichen Salzes, und 3 ml einer Lösung von 12,5 g NaF in 1 l -VE-Wasser gegeben. Der pH-Wert des Testansatzes wird mit NaOH oder HCl eingestellt. Danach wird mit VE-Wasser auf 250 ml aufgefüllt. Ein Teil der Lösung wird in ein 50 ml PE-Gefäß überführt und bei 60 °C 3 Stunden gelagert, danach die Lösung abgekühlt, über einen Cellulosenitrat-Filter (Porenweite 0,45 $\mu$m) filtriert und im Filtrat die Ca- und Fluorid-Konzentration bestimmt. Die prozentuale Stabilisierung St ergibt sich aus der Konzentration des Blindwertes c(BW), der theoretischen Ausgangskonzentration c(0) und der gemessenen Konzentration im Filtrat c(f) nach:

$$St = (c(f)-c(BW))/(c(0)-c(BW)) * 100\,\%$$

C(0) für Calcium bzw C(0) für Fluorid wurde an einer Testlösung ohne Fluorid- bzw. Calciumzusatz bestimmt.
Rechnerisch ergeben sich folgende Konzentrationen in der Testlösung:

Calcium:     2,4 mol/m$^3$
Fluorid:     3,6 mol/m$^3$

Ergebnisse:

| Zusatz (wasserlösliches Salz) | Konzentration im Testwasser [mol/m$^3$] | PH-Wert | Calcium-Stabilisierung [%] | Fluorid-Stabilisierung [%] | Aussehen der Testlösung vor Filtration |
|---|---|---|---|---|---|
| NaHCO$_3$ | 5 | 8,5 | - 26 | 8 | trüb |
| NaHCO$_3$ | 10 | 8,5 | -30 | 21 | trüb |
| NaCl | 50 | 7 | 14 | 6 | trüb |
| NaCl | 50 | 3 | -1 | 0 | trüb |
| Na$_2$SO$_4$ | 15 | 7 | 12 | 19 | trüb |
| Na$_2$SO$_4$ | 15 | 3 | 16 | 10 | trüb |
| *MgCl$_2$ | 5 | 7 | 78 | 98 | klar |
| *MgCl$_2$ | 5 | 3 | 76 | 95 | klar |
| *MgCl$_2$ | 4 | 3 | 41 | 68 | klar |
| *MgCl$_2$ | 3 | 3 | 20 | 28 | klar |
| H$_3$BO$_3$ | 10 | 7 | 12 | 11 | trüb |
| Na$_3$PO$_4$ | 4,5 | 5 | -1 | 11 | trüb |
| Na$_3$PO$_4$ | 4,5 | 3 | 2 | 7 | trüb |

Die mit einem "*" gekennzeichneten Salze sind erfindungsgemäß, die nicht gekennzeichneten Salze stellen nicht erfindungsgemäße Vergleichsbeispiele dar. Überaschenderweise kann durch Mg$^{2+}$- -Zugabe die Abscheidung von Calciumfluorid deutlich reduziert werden. Im Falle von Magnesiumzusatz entstehen optisch klare Lösungen, wobei das Anion eine untergeordnete Rolle spielt.

Bei hohen Fluorid-Konzentrationen kann der Einsatz von wasserlöslichem Salz und Scale-Inhibitor vorteilhaft sein. Hier zeigen sich deutliche synergistische Effekte:

Beispiel:

Arbeitsvorschrift:

200 ml auf 60 °C vorgewärmtes VE-Wasser werden in eine 250 ml PE-Flasche gegeben. Dazu werden 4 ml einer Lösung von 22,93 g CaCl$_2$•2H$_2$O und 7,84 g MgCl$_2$•6H$_2$Oin 1 l VE-Wasser, 4 ml einer Lösung von 3,63 g FeCl$_3$ in 1 l VE-Wasser, gegebenenfalls 3 ml einer Lösung des zu testenden wasserlöslichen Salzes in VE-Wasser gegeben. Der pH-Wert des Testansatzes wird mit NaOH oder HCl auf 3,5 eingestellt. Es werden gegebenenfalls 1 ml einer Lösung von 12,5 g Scale-Inhibitor in 1 l VE-Wasser zugegeben. Dann werden 4 ml einer Lösung von 26,26 g Natriumfluorid und 6,82 g Natriumsilicat (Handelsname:Britesil$^R$ C20, Fa. Akzo) und 13,86 g Natriumsulfat in 1l VE-Wasserr zugegeben, falls erforderlich der pH-Wert erneut eingestellt und mit VE-Wasser auf 250 ml aufgefüllt. Ein Teil der Lösung wird in ein 50 ml PE-Gefäß überführt und bei 60 °C 3 Stunden gelagert, danach die Lösung abgekühlt, über einen Cellulosenitrat-Filter (Porenweite 0,45 μm) filtriert und im Filtrat die Ca- und Fluorid-Konzentration bestimmt. Die prozentuale Stabilisierung St ergibt sich aus der Konzentration des Blindwertes c(BW), der theoretischen Ausgangskonzentration c(0) und der gemessenen Konzentration im Filtrat c(f) nach:

$$St = (c(f)-c(BW))/(c(0)-c(BW)) * 100 \%$$

C(0) für Calcium bzw C(0) für Fluorid wurde an einer Testlösung ohne Fluorid- bzw. Calciumzusatz bestimmt.

Es ergibt sich rechnerisch folgende Zusammensetzung der Testlösung:

| | | |
|---|---|---|
| Calcium: | 2,5 | mol/m$^3$ |
| Magnesium: | 0,9 | mol/m$^3$ |
| Eisen: | 20 | mg/l |
| Fluorid: | 190 | mg/l |
| Sulfat: | 150 | mg/l |
| Silikat: | 60 | mg/l als $SiO_2$ |

| Zusatz (Wasserlös-liches Salz) | Konzentr. im Test-wasser [mol/m$^3$] | Scale-Inhibitor | Konzentr. im Testwasser [ppm] | Calcium-Stabilisierung [%] | Fluorid-Stabilisierung [%] | Aussehen der Testlösung vor Filtration |
|---|---|---|---|---|---|---|
| MgCl$_2$ | 5 | - | - | 42 | 32 | Leicht trüb |
| - | - | HEDP | 50 | 31 | 44 | leicht trüb |
| MgCl$_2$ | 5 | HEDP | 50 | 76 | 93 | klar |
| MgCl$_2$ | 4 | HEDP | 40 | 85 | 96 | klar |

HEDP: 60 %ige Lösung von Hydroxiethandiphosphonsäure (Handelsname: Turpinal$^R$ SL)

Aus den Versuchen wird ein Synergismus zwischen der Wirkung des wasserlöslichen Salzes und dem Scale-Inhibitor deutlich: Rechnerisch ergibt sich aus den Versuchen mit den einzelnen Komponenten ein Stabilisierung für 5 mol/m$^3$ MgCl$_2$ und 50 ppm HEDP von 73 % (Ca) bzw 76 (F) gegenüber den gemessen 76 % (Ca) bzw. 93 % (F) für die Kombination aus 5 mol/m$^3$ MgCl$_2$ und 50 ppm HEDP. Eine Reduktion der Konzentrationen auf 4 mol/m$^3$ MgCl$_2$ und 40 ppm HEDP zeigt ein gleich gute Stabilisierung. Der Synergismus wird auch in dem Aussehen der Lösung vor der Filtration deutlich.

Die folgende Tabelle zeigt weitere Ergebnisse zum Synergismus zwischen Mg-Ionen und Scale-Inhibitoren, die entsprechend der vorstehenden Methode erhalten wurden. Als Mg-Salz wurde das Sulfat verwendet. Die tatsächlich gemessene Stabilisierung in % ("gem.")wird mit der aus den Einzeleffekten von Mg-Ionen und Scale-Inhibitor berechneten ("ber.") verglichen Mg-Ionen wurden in einer Konzentration von 5 mmol/l, der Scale-Inhibitor in einer Konzentration von 50 mg/l eingesetzt

| Zusatz | Scale-Inhibitor | Calcium-Stabilisierung gem./ber. [%] | Fluorid-Stabilisierung Gem./ber. [%] | Aussehen der Testlösung vor Filtration |
|---|---|---|---|---|
| MgSO$_4$ | a) | 44/52 | 65/42 | Leicht trüb |
| - | a) | 8 | 10 | trüb |
| MgSO$_4$ | b) | 58/63 | 49/43 | leicht trüb |
| - | b) | 21 | 11 | trüb |
| MgSO$_4$ | c) | 55/50 | 39/30 | leicht trüb |
| - | c) | 8 | -2 | trüb |

a) Sokalan® CP 10: Polyacrylsäure (BASF AG), CAS-Nr. 9003-01-4
b) Coatex® TH 360-45 AS,:Acrylsäure/Methacrylsäure Copolymer (Coatex)
c) Belclene ® 200: Polymaleinsäure (Biolab / Great Lakes Chemical), CAS-Nr. 26099-09-2

In einer weiteren Ausführungsform wird zusätzlich zu der Dosierung des wasserlöslichen Salzes und gegebenenfalls des Scale-Inhibitors dem Wasser eine Puffersubstanz zugegeben, um den Abfall des pH-Wertes durch den Eintrag von Fluorid in das Wasser zu vermeiden. Bevorzugt werden anorganische Puffer-Systeme verwendet, insbesondere Alkalicarbonat, Alkalihydrogencarbonat, Alkaliborat, Alkaliorthophosphat, Alkalipolyphosphat.

**Patentansprüche**

1.  Verfahren zur Verhinderung der Abscheidung von Calciumfluorid in einem Kühl- oder Prozeßwasser, **dadurch gekennzeichnet, daß** man dem Prozeßwasser mindestens ein wasserlösliches Salz in einer Konzentration zwischen 0,5 und 10 mol/m$^3$ zugibt, das Magnesiumkationen sowie Gegenionen ausgewählt aus Clorid-, Nitrat-, Acetat-, Hydrogencarbonat-, Carbonat- und Sulfationen enthält.

**2.** Verfahren nach Anspruch 1, **dadurch gekennzeichnet, daß** man dem Kühl- oder Prozeßwasser zusätzlich mindestens einen Scale-Inhibitor zugibt.

**3.** Verfahren nach Anspruch 2, **dadurch gekennzeichnet, daß** der Scale-Inhibitor ausgewählt ist aus polymeren Scale-Inhibitoren oder aus Aminoalkylenphosphonsäuren, geminalen Diphosphonsäuren, Phosphonocarbonsäuren und Phosphorsäureestern.

**4.** Verfahren nach einem oder mehreren der Ansprüche 1 bis 3, **dadurch gekennzeichnet, daß** man dem Kühl- oder Prozeßwasser zusätzlich eine oder mehrere Puffersubstanzen zugibt.

**5.** Verfahren nach einem oder mehreren der Ansprüche 1 bis 4, **dadurch gekennzeichnet, daß** es sich bei dem Kühl- oder Prozeßwasser um Wasser handelt, das für einen oder mehrere der nachstehenden Zwecke eingesetzt wird: Spritzwasserkühlung in Stranggussanlagen, Gaskühlung, Gaswäsche, Nassentstaubung von Gasen.

**Claims**

**1.** A process for preventing the deposition of calcium fluoride in a cooling or process water, **characterized in that** at least one water-soluble salt containing magnesium cations and counterions selected from chloride, nitrate, acetate, hydrogen carbonate, carbonate and sulfate ions is added to the process water in a concentration of 0.5 to 10 mol/m$^3$.

**2.** A process as claimed in claim 1, **characterized in that** at least one scale inhibitor is also added to the cooling or process water.

**3.** A process as claimed in claim 2, **characterized in that** the scale inhibitor is selected from polymeric scale inhibitors or from aminoalkylene phosphonic acids, geminal diphosphonic acids, phosphonocarboxylic acids and phosphoric acid esters.

**4.** A process as claimed in one or ore more of claims 1 to 3, **characterized in that** one or more buffer substances is/are also added to the cooling or process water.

**5.** A process as claimed in one or more of claims 1 to 4, **characterized in that** the cooling or process water is water used for one or more of the following purposes: spray water cooling in extrusion plants, gas cooling, gas scrubbing, wet dust extraction from gases.

**Revendications**

**1.** Procédé pour empêcher le dépôt de fluorure de calcium dans une eau de refroidissement ou de processus, **caractérisé en ce que** l'on ajoute à l'eau de processus, au moins un sel hydrosoluble en une concentration comprise entre 0,5 et 10 mol/m$^3$, qui contient des cations magnésium ainsi que des contre-ions choisis parmi les ions chlorure, nitrate, acétate, hydrogénocarbonate, carbonate, et sulfate.

**2.** Procédé selon la revendication 1, **caractérisé en ce que** l'on ajoute en plus au moins un agent anti-tartre à l'eau de refroidissement ou de processus.

**3.** Procédé selon la revendication 2, **caractérisé en ce que** l'agent anti-tartre est choisi parmi les agents anti-tartre polymères ou parmi les acides aminoalkylènephosphoniques, les acides diphosphoniques géminaux, les acides phosphonocarboxyliques et les esters d'acide phosphorique.

**4.** Procédé selon l'une ou plusieurs des revendications 1 à 3, **caractérisé en ce que** l'on ajoute en plus une ou plusieurs substances tampons à l'eau de refroidissement ou de processus.

**5.** Procédé selon l'une ou plusieurs des revendications 1 à 4, **caractérisé en ce que**, quant à l'eau de refroidissement ou de processus, il s'agit d'eau, qui est mise en oeuvre dans l'un ou plusieurs des buts suivants : refroidissement d'eau de pulvérisation dans les installations de coulée continue, le refroidissement des gaz, le lavage des gaz, le dépoussiérage par voie humide de gaz.